# EUROPÄISCHE PATENTANMELDUNG

(11) **EP 4 184 135 A1**
(43) Veröffentlichungstag der Anmeldung: **24.05.2023**
(21) Anmeldenummer: 21209905.5
(22) Anmeldetag: 23.11.2021
(51) Int. Cl.: G01J 3/02, G01J 3/10, G01S 7/00

(54) **HOCHFREQUENTE THERMISCHE STRAHLUNGSQUELLE FÜR DIE GASSPEKTROSKOPIE**

(71) Anmelder: Fraunhofer-Gesellschaft zur Förderung der angewandten Forschung e.V., 80686 München (DE)
(72) Erfinder: Eberhardt, André, 79110 Freiburg (DE); Weber, Christian, 79110 Freiburg (DE)
(74) Vertreter: WSL Patentanwälte Partnerschaft mbB

(57) **Zusammenfassung**

Die vorliegende Erfindung betrifft eine Vorrichtung zum Erzeugen und Abstrahlen modulierter elektromagnetischer Anregungsstrahlung mit einer Strahlungsquelle, einer Blende und einer Antriebseinrichtung, wobei die Strahlungsquelle derart eingerichtet ist, dass die Strahlungsquelle in einem Betrieb der Vorrichtung die elektromagnetische Anregungsstrahlung emittiert, wobei die Strahlungsquelle und die Blende derart angeordnet sind, dass die von der Strahlungsquelle emittierte Anregungsstrahlung die Blende beleuchtet, wobei die Blende eine Mehrzahl von ersten Flächenabschnitten und eine Mehrzahl von zweiten Flächenabschnitten aufweist, wobei die Mehrzahl von ersten Flächenabschnitten eine erste Transmission oder eine erste optische Weglänge aufweist, wobei die Mehrzahl von zweiten Flächenabschnitten eine zweite Transmission oder eine zweite optische Weglänge aufweist, wobei die erste Transmission von der zweiten Transmission verschieden ist oder die erste optische Weglänge von der zweiten optischen Weglänge verschieden ist, und wobei die Antriebseinrichtung derart ausgestaltet und angeordnet ist, dass in dem Betrieb der Vorrichtung die Strahlungsquelle und die Blende von der die Antriebseinrichtung angetrieben derart relativ zueinander bewegbar sind, dass die Strahlungsquelle und die Blende periodisch abwechselnd eine erste Relativposition zueinander und eine zweite Relativposition zueinander aufweisen. Dabei weist erfindungsgemäß die Strahlungsquelle eine Mehrzahl von Emitterflächen auf, wobei jeweils zwei Emitterflächen räumlich durch eine nichtemittierende Fläche voneinander beabstandet angeordnet sind, und wobei die Emitterflächen der Strahlungsquelle zueinander, die Flächenabschnitte der Blende zueinander sowie die Strahlungsquelle und die Blende zueinander derart angeordnet sind, dass in der ersten Relativposition die Anregungsstrahlung die Mehrzahl von ersten Flächenabschnitten beleuchtet und in der zweiten Relativposition die Anregungsstrahlung die Mehrzahl von zweiten Flächenabschnitten beleuchtet.

## Beschreibung

Die vorliegende Erfindung betrifft eine Vorrichtung zum Erzeugen und Abstrahlen modulierter elektromagnetischer Anregungsstrahlung mit einer Strahlungsquelle, einer Blende und einer Antriebseinrichtung, wobei die Strahlungsquelle derart eingerichtet ist, dass die Strahlungsquelle in einem Betrieb der Vorrichtung die elektromagnetische Anregungsstrahlung emittiert, wobei die Strahlungsquelle und die Blende derart angeordnet sind, dass die von der Strahlungsquelle emittierte Anregungsstrahlung die Blende beleuchtet, wobei die Blende eine Mehrzahl von ersten Flächenabschnitten und eine Mehrzahl von zweiten Flächenabschnitten aufweist, wobei die Mehrzahl von ersten Flächenabschnitten eine erste Transmission oder eine erste optische Weglänge aufweist, wobei die Mehrzahl von zweiten Flächenabschnitten eine zweite Transmission oder eine zweite optische Weglänge aufweist, wobei die erste Transmission von der zweiten Transmission verschieden ist oder die erste optische Weglänge von der zweiten optischen Weglänge verschieden ist, und wobei die Antriebseinrichtung derart ausgestaltet und angeordnet ist, dass in dem Betrieb der Vorrichtung die Strahlungsquelle und die Blende von der Antriebseinrichtung angetrieben derart relativ zueinander bewegbar sind, dass die Strahlungsquelle und die Blende periodisch abwechselnd eine erste Relativposition zueinander und eine zweite Relativposition zueinander aufweisen.

Die vorliegende Erfindung betrifft zudem ein Verfahren zum Erzeugen und Abstrahlen modulierter elektromagnetischer Anregungsstrahlung mit den Schritten: Emittieren der elektromagnetischen Anregungsstrahlung, Beleuchten einer Blende mit der emittierten Anregungsstrahlung, wobei die Blende eine Mehrzahl von ersten Flächenabschnitten und eine Mehrzahl von zweiten Flächenabschnitten aufweist, wobei die Mehrzahl von ersten Flächenabschnitten eine erste Transmission oder eine erste optische Weglänge aufweist, wobei die Mehrzahl von zweiten Flächenabschnitten eine zweite Transmission oder eine zweite optische Weglänge aufweist, wobei die erste Transmission von der zweiten Transmission verschieden ist oder die erste optische Weglänge von der zweiten optischen Weglänge verschieden ist, und Bewegen der Strahlungsquelle und der Blende derart relativ zueinander, dass die Strahlungsquelle und die Blende periodisch abwechselnd eine erste relative Position zueinander und eine zweite relative Position zueinander aufweisen.

Für eine Vielzahl von Anwendungen ist es notwendig, der von einer Strahlungsquelle erzeugten und abgestrahlten elektromagnetischen Strahlung eine Intensitätsmodulation mit einer hohen Modulationsfrequenz aufzuprägen. In der optischen Messtechnik ist es gang und gäbe, die zur Anregung eines Systems genutzte elektromagnetische Anregungsstrahlung in ihrer Intensität zu modulieren, um eine effiziente Rauschunterdrückung des von einem Detektor erfassten Signals mithilfe eines Lock-in-Verstärkers zu erzielen.

Für die Modulation der erzeugten und abgestrahlten elektromagnetischen Strahlung sind aus dem Stand der Technik grundsätzlich zwei voneinander zu unterscheidende Konzepte bekannt, nämlich eine direkte Modulation der Strahlungsquelle, bei welcher beispielsweise durch eine Modulation des elektrischen Stroms, welcher die Strahlungsquelle treibt, die Intensität der abgestrahlten elektromagnetischen Strahlung ebenfalls moduliert wird. Handelt es sich bei der Strahlungsquelle um einen thermischen Strahler, so versagt diese Modulationsart bei höheren Frequenzen, da die Modulationstiefe aufgrund der thermischen Trägheit der Strahlungsquelle bei hohen Frequenzen abnimmt.

Das zweite Konzept sieht vor, die von der Strahlungsquelle erzeugte und bereits abgestrahlte elektromagnetische Anregungsstrahlung mithilfe einer periodisch in und aus dem Strahlengang der Anregungsstrahlung hinein und hinaus bewegten Blende zu modulieren. Eine solche Blende wird auch als Chopper bezeichnet und ist zumeist eine rotierende Sektorblende (Chopperrad), welche sich schnell dreht und die elektromagnetische Strahlung in ihrer Intensität nahezu rechteckförmig zwischen 0 und 100% moduliert.

Demgegenüber ist es die Aufgabe der vorliegenden Erfindung, eine Vorrichtung und ein Verfahren zum Erzeugen und Abstrahlen modulierter elektromagnetischer Anregungsstrahlung bereitzustellen, welche eine hohe Effizienz bei der Erzeugung und Abstrahlung der elektromagnetischen Anregungsstrahlung aufweisen.

Erfindungsgemäß wird diese Aufgabe durch eine Vorrichtung gemäß dem unabhängigen Anspruch 1 der vorliegenden Anmeldung gelöst. Dazu weist die Strahlungsquelle der Vorrichtung der eingangs genannten Art eine Mehrzahl von Emitterflächen auf, wobei jeweils zwei Emitterflächen räumlich durch eine nicht emittierende Fläche voneinander beabstandet angeordnet sind, und die Emitterflächen der Strahlungsquelle zueinander, die Flächenabschnitte der Blende zueinander sowie die Strahlungsquelle und die Blende zueinander derart angeordnet sind, dass in der ersten Relativposition die Anregungsstrahlung der Mehrzahl von ersten Flächenabschnitten beleuchtet und in der zweiten Relativposition die Anregungsstrahlung die Mehrzahl von zweiten Flächenabschnitten beleuchtet.

Es ist die Grundidee der vorliegenden Erfindung, sowohl die Blende in erste und zweite Flächenabschnitte mit unterschiedlichen optischen Eigenschaften aufzuteilen als auch die Strahlungsquelle in eine Mehrzahl von Emitterflächen aufzuteilen, wobei jeweils zwei Emitterflächen räumlich durch eine nicht emittierende Fläche voneinander beabstandet sind. In anderen Worten ausgedrückt weist sowohl die Blende als auch die Strahlungsquelle eine räumliche Modulation auf. Durch eine Relativbewegung der Blende und der Strahlungsquelle gegeneinander wird die Intensität der von der gesamten Vorrichtung abgestrahlten Anregungsstrahlung moduliert.

Ein Vorteil der vorliegenden Erfindung gegenüber dem Stand der Technik ist es, dass die Relativbewegung der Blende und der Strahlungsquelle zueinander durch einen vergleichsweise kurzen Weg gekennzeichnet ist verglichen mit einer nicht strukturierten Strahlungsquelle für welche eine Blende aus dem Stand der Technik die gesamte Fläche der Strahlungsquelle periodisch abdecken oder freigeben muss. Zudem ist es ein Vorteil der vorliegenden Erfindung, dass sie es ermöglicht, eine Strahlungsquelle mit einer insgesamt großen emittierenden Fläche bereitzustellen.

In einer Ausführungsform der Erfindung bildet jede aus der Mehrzahl von Emitterflächen der Strahlungsquelle einen thermischen Strahler. In einer alternativen Ausführungsform der Erfindung bildet jede aus der Mehrzahl von Emitterflächen der Strahlungsquelle zumindest eine Leuchtdiode. Besondere Vorteile ergeben sich jedoch bei der Realisierung der Mehrzahl von Emitterflächen als thermische Strahler.

Die Modulationstiefe der von der erfindungsgemäßen Vorrichtung erzeugten Intensitätsmodulation ist unabhängig von der Modulationsfrequenz, selbst wenn die Emitterflächen von thermischen Strahlern gebildet sind. Die verfügbare optische Leistung der abgestrahlten elektromagnetischen Strahlung bleibt im Mittel unabhängig von der Modulationsfrequenzen konstant. Gleichzeitig lassen sich je nach Auslegung der Antriebseinrichtung Modulationsfrequenzen im Bereich von Kilohertz erreichen.

Für die Erfindung ist es zunächst einmal nur wesentlich, dass die Strahlungsquelle und die Blende eine Relativbewegung gegeneinander ausführen. Grundsätzlich ist es möglich, dass die Strahlungsquelle feststeht und die Blende gegenüber der Strahlungsquelle bewegt wird oder umgekehrt. Denkbar sind auch Varianten, bei denen sowohl die Blende als auch die Strahlungsquelle gegenüber einem gemeinsamen, feststehenden Gehäuse bewegt werden.

In einer Ausführungsform der Erfindung bewirkt die Antriebseinrichtung eine lineare Bewegung der Strahlungsquelle und der Blende relativ zueinander. Eine lineare Relativbewegung lässt sich beispielsweise mithilfe eines Piezoantriebs, eines elektromechanischen oder eines elektrostatischen Linearantriebs bewirken. In einer Ausführungsform der Erfindung ist die Relativbewegung eine Rotationsbewegung, bei welcher die Strahlungsquelle und die Blende relativ zueinander rotieren oder gegeneinander verschwenkt werden. In einer solchen Ausführungsform ist die Antriebseinrichtung beispielsweise ein Elektromotor oder ein radialer Schwinger, der an einer Torsionsfeder aufgehängt ist.

In einer Ausführungsform der Erfindung ist die Antriebseinrichtung derart ausgestaltet, dass die Antriebseinrichtung in dem Betrieb der Vorrichtung eine oszillierende, vorzugsweise eine periodisch oszillierende relative Bewegung, insbesondere eine oszillierende, vorzugsweise eine periodisch oszillierende relative Linearbewegung, zwischen der Strahlungsquelle und der Blende bewirkt.

In einer Ausführungsform der Erfindung sind die Mehrzahl von ersten Flächenabschnitten, die Mehrzahl von zweiten Flächenabschnitten und die Mehrzahl von Emitterflächen jeweils streifenförmig, vorzugsweise rechteckig und streifenförmig. Eine solche Ausgestaltung bietet sich an, wenn die Relativbewegung eine lineare Relativbewegung ist. Es versteht sich, dass dann, wenn die Relativbewegung eine Schwenk- oder Rotationsbewegung ist, die Mehrzahl von ersten Flächenabschnitten, die Mehrzahl von zweiten Flächenabschnitten und die Mehrzahl von Emitterflächen jeweils eine zu Dreh- oder Schwenkachse radiale Struktur bilden.

In einer Ausführungsform der Erfindung weisen die rechteckigen Streifen der Mehrzahl von ersten Flächenabschnitten, der Mehrzahl von zweiten Flächenabschnitten und der Mehrzahl von Emitterflächen eine Breite in einem Bereich von 10 µm bis 200 µm, vorzugsweise in einem Bereich von 50 µm bis 100 µm auf.

In einer Ausführungsform der Erfindung liegt eine Gesamtfläche der Strahlungsquelle mit der Mehrzahl von Emitterflächen und der nicht emittierenden Flächen in einem Bereich von 0,2 mm x 0,2 mm bis 10 mm x 10 mm.

In einer Ausführungsform der Erfindung variiert die Anordnung der rechteckigen oder quadratischen Streifen in einer Längsrichtung der Streifen senkrecht zur Bewegungsrichtung. Auf diese Weise wird ein Schachbrettmuster der Emitterflächen sowie der ersten und zweiten Flächenabschnitte der Blende realisiert.

In einer Ausführungsform der Erfindung weisen die Blende und die Emitterflächen einen Abstand gemessen in einer Richtung senkrecht zu den Emitterflächen von 100 µm oder weniger, vorzugsweise von 10 µm oder weniger auf. Auf diese Weise kann eine miniaturisierte Vorrichtung bereitgestellt werden. Zudem reduziert eine Verkürzung des Abstands der Emitterflächen zu den Flächenabschnitten der Blende den Anteil der elektromagnetischen Strahlung, welcher nach einer Verschiebung, so dass der Strahlengang blockiert oder abgelenkt ist, noch transmittiert wird. Mit anderen Worten wird die Modulationstiefe höher, je geringer der Abstand zwischen den Emitterflächen und der Blende wird. In einer Ausführungsform der Erfindung beträgt der Abstand zwischen der Blende und den Emitterflächen gemessen in einer Richtung senkrecht zu den Emitterflächen mindestens 0,5 µm.

Die Intensitätsmodulation einer Blende mit ersten Flächenabschnitten, die eine erste Transmission und zweiten Flächenabschnitten, die eine zweite Transmission aufweisen, beruht darauf, dass die elektromagnetische Strahlung von den ersten und zweiten Flächenabschnitten in unterschiedlicher Intensität durchgelassen wird. In einer weiteren Ausführungsform der Erfindung ist die Mehrzahl von ersten Flächenabschnitten der Blende für die Anregungsstrahlung transparent (erste Transmission von Null verschieden) und die Mehrzahl von zweiten Flächenabschnitten ist für die Anregungsstrahlung intransparent (zweite Transmission gleich Null). Eine solche Ausgestaltung entspricht derjenigen eines klassischen Choppers, bei welchem beispielsweise das Chopper-Rad periodisch durchbrochene Metallsegmente aufweist, die sich radial erstrecken. Dabei ist es für die vorliegende Erfindung unerheblich, ob die elektromagnetische Anregungsstrahlung, welche auf die intransparenten zweiten Flächenabschnitte trifft, von diesen reflektiert oder absorbiert wird. Daher weist in einer Ausführungsform der Erfindung die Mehrzahl von zweiten Flächenabschnitten jeweils eine spiegelnde Fläche oder einen Absorber für die Anregungsstrahlung auf.

Demgegenüber nutzt eine Ausführungsform, bei welcher die Mehrzahl von ersten Flächenabschnitten und die Mehrzahl von zweiten Flächenabschnitten eine unterschiedliche optische Weglänge aufweisen, d. h. beide die Anregungsstrahlung im gleichen Maße transmittieren, die Welleneigenschaften der elektromagnetischen Strahlung. Die Mehrzahl von ersten Flächenabschnitten und die Mehrzahl von zweiten Flächenabschnitten sind in einer solchen Ausführungsform derart ausgestaltet, dass in einer Abstrahlungsrichtung dann, wenn die Mehrzahl von ersten Flächenabschnitten von den Emitterflächen beleuchtet werden eine konstruktive Interferenz entsteht, sodass die Strahlungsquelle als eingeschaltet erscheint. Werden hingegen von den Emitterflächen überwiegend oder ausschließlich die Mehrzahl von zweiten Flächenabschnitten beleuchtet, so sind diese derart ausgestaltet, dass in der ausgewählten Strahlrichtung eine destruktive Interferenz auftritt. Die Strahlungsquelle erscheint dann als ausgeschaltet. Durch das wiederholte Wechseln zwischen diesen beiden Zuständen wird die Strahlung in der Strahlungsrichtung wie zuvor intensitätsmoduliert.

Mit anderen Worten ausgedrückt wird bei einer solchen Ausführungsform die aktive Fläche der Strahlungsquelle, d. h. die Mehrzahl von Emitterflächen mit einer gegenüber der Strahlungsquelle beweglichen Phasenstrukturstruktur der Blende versehen, die dazu führt, dass es zwei Überlagerungszustände der von der Mehrzahl von Emitterflächen abgestrahlten Anregungsstrahlung gibt.

Der Vorteil dieser Ausführungsform der Erfindung ist die Anpassbarkeit der Phasenstruktur auf entsprechende Anwendungsfälle.

In einer Ausführungsform der Erfindung bildet die Mehrzahl von ersten Flächenabschnitten gemeinsam eine räumlich periodische Struktur mit einer räumlichen Periodizität in einer Bewegungsrichtung der Blende relativ zu der Strahlungsquelle.

In einer Ausführungsform der Erfindung bildet die Mehrzahl von Emitterflächen eine räumlich periodische Struktur mit einer räumlichen Periodizität in einer Bewegungsrichtung der Blende relativ zu der Strahlungsquelle.

In einer Ausführungsform der Erfindung ist die räumliche Periodizität der räumlich periodischen Struktur der Mehrzahl von ersten Flächenabschnitten von der räumlichen Periodizität der räumlich periodischen Struktur der Emitterflächen verschieden. Durch die Abweichung der räumlichen Periodizitäten der Blende einerseits und der Strahlungsquelle andererseits können Parallaxeeffekte und damit eine Verringerung der Modulationstiefe vermieden werden. Durch die unterschiedlichen räumlichen Periodizitäten wird eine Vorrichtung mit einer maximierten Modulationstiefe bereitgestellt.

In einer Ausführungsform der Erfindung ist die Periodizität der Emitterflächen kleiner als die Periodizität der ersten Flächenabschnitte der Blende.

In einer Ausführungsform der Erfindung ist die räumliche Periodizität der räumlich periodischen Struktur der ersten Flächenabschnitte oder die räumliche Periodizität der räumlich periodischen Struktur der Emitterfläche in der Bewegungsrichtung konstant.

In einer Ausführungsform der Erfindung variiert zumindest die räumliche Periodizität der räumlich periodischen Struktur der ersten Flächenabschnitte oder die räumliche Periodizität der räumlich periodischen Struktur der Emitterflächen in der Bewegungsrichtung über die Vorrichtung hinweg. Eine solche Ausgestaltung weist den Vorteil auf, dass sie es ermöglicht, die von der Strahlungsquelle erzeugte und abgestrahlte Anregungsstrahlung mit mindestens zwei verschiedenen Modulationsfrequenzen zu modulieren, wobei in einem ersten räumlichen Bereich der Strahlungsquelle der elektromagnetischen Strahlung eine erste Modulationsfrequenz aufgeprägt wird und in einem zweiten räumlichen Bereich der Strahlungsquelle der elektromagnetischen Strahlung eine zweite Modulationsfrequenz aufgeprägt wird. Es versteht sich, dass die Erfindung nicht auf das Aufprägen von zwei Modulationsfrequenzen beschränkt ist.

In einer Ausführungsform der Erfindung ist die Strahlungsquelle derart eingerichtet, dass die Strahlungsquelle in dem Betrieb der Vorrichtung die Anregungsstrahlung mit einer Trägerfrequenz erzeugt, wobei die Emitterflächen derart ausgestaltet sind, dass sich die Trägerfrequenz in der Bewegungsrichtung von Emitterfläche zu Emitterfläche ändert. Auf diese Weise kann eine einzige Strahlungsquelle eine Mehrzahl von Trägerfrequenzen erzeugen und abstrahlen. In einer Ausführungsform der Erfindung sind diese unterschiedlichen Trägerfrequenzen mit unterschiedlichen Modulationsfrequenzen moduliert.

Die Anwendungsmöglichkeiten für amplitudenmodulierte elektromagnetische Anregungsstrahlung sind vielfältig. Daher wird zumindest eine der zuvor genannten Aufgaben auch durch einen photoakustischen Sensor mit einer Vorrichtung zum Erzeugen von amplitudenmodulierter elektromagnetischer Anregungsstrahlung, so wie sie in Ausführungsformen davon zuvor beschrieben wurde, gelöst.

In einer weiteren Ausführungsform wird ein Photometer mit einer Vorrichtung zum Erzeugen von amplitudenmodulierter elektromagnetischer Anregungsstrahlung, so wie sie in Ausführungsformen davon zuvor beschrieben wurde, bereitgestellt.

Zumindest eine der zuvor genannten Aufgaben wird auch durch ein Verfahren zum Erzeugen und Abstrahlen modulierter elektromagnetischer Anregungsstrahlung gemäß dem darauf in der vorliegenden Anmeldung gerichteten unabhängigen Anspruch gelöst. Dazu wird in einem Verfahren der eingangs genannten Art die Anregungsstrahlung von einer Mehrzahl von Emitterflächen emittiert, wobei jeweils zwei Emitterflächen räumlich durch eine nicht emittierende Fläche voneinander beabstandet angeordnet sind und die Emitterflächen zueinander, die Flächenabschnitte der Blende zueinander sowie die Emitterflächen und die Blende zueinander derart angeordnet sind, dass in der ersten Relativposition die Anregungsstrahlung die Mehrzahl von ersten Flächenabschnitten beleuchtet und in der zweiten Relativposition die Anregungsstrahlung die Mehrzahl von zweiten Flächenabschnitten beleuchtet.

Soweit zuvor Aspekte der Erfindung im Hinblick auf die Vorrichtung beschrieben wurden, so gelten diese auch für das entsprechende Verfahren zum Erzeugen und Abstrahlen modulierter elektromagnetischer Anregungsstrahlung. Soweit das Verfahren mit einer Vorrichtung gemäß einer Ausführungsform der vorliegenden Erfindung ausgeführt wird, so weist diese die entsprechenden Einrichtungen hierfür auf. Insbesondere sind Ausführungsformen der Vorrichtung zum Ausführen des Verfahrens geeignet.

Weitere Vorteile, Merkmale und Anwendungsmöglichkeiten der vorliegenden Erfindung werden anhand der folgenden Beschreibung von Ausführungsformen und der dazugehörigen Figuren deutlich. In den Figuren sind gleiche Elemente mit gleichen Bezugszeichen bezeichnet.
- Figur 1: ist eine schematische Querschnittsansicht einer ersten Ausführungsform einer erfindungsgemäßen Vorrichtung zum Erzeugen und Abstrahlen modulierter elektromagnetischer Anregungsstrahlung in einem ersten Betriebszustand.
- Figur 2: ist eine schematische Querschnittsansicht der Vorrichtung aus Figur 1 in einem zweiten Betriebszustand.
- Figur 3: ist eine schematische Querschnittsansicht einer zweiten Ausführungsform einer erfindungsgemäßen Vorrichtung zum Erzeugen und Abstrahlen modulierter elektromagnetischer Anregungsstrahlung in einem ersten Betriebszustand.
- Figur 4: ist eine schematische Querschnittsansicht der Vorrichtung aus Figur 3 in einem zweiten Betriebszustand.
- Figur 5: ist eine schematische Querschnittsansicht eines Photometers mit der Vorrichtung aus den Figuren 1 und 2.

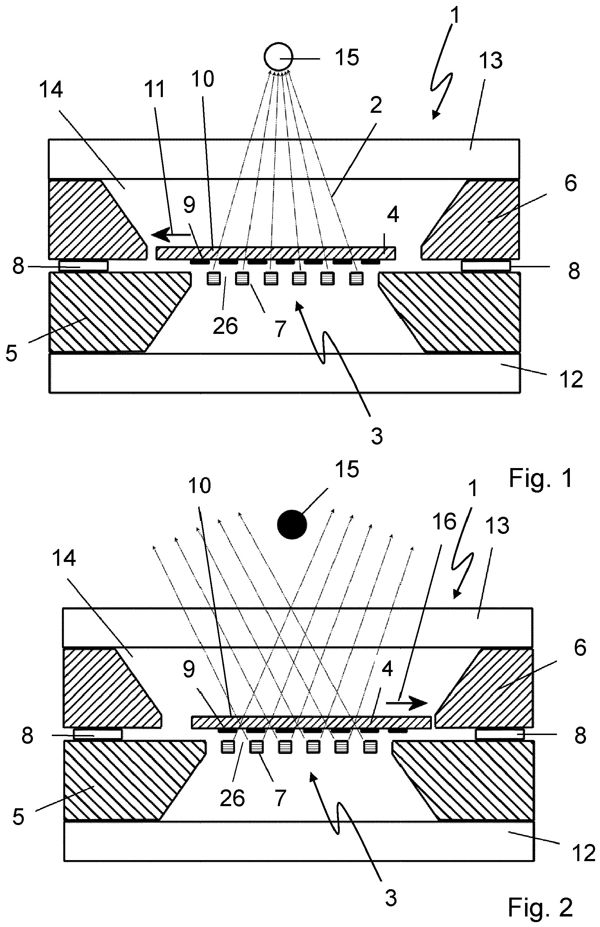

Die Figuren 1 und 2 zeigen zwei Betriebszustände einer Vorrichtung 1 zum Erzeugen und Abstrahlen modulierter elektromagnetischer Anregungsstrahlung 2. Die Vorrichtung 1 umfasst als zentrale Elemente eine Strahlungsquelle 3, eine relativ zu der Strahlungsquelle 3 linear bewegbare Blende 4 und eine Antriebseinrichtung in Form eines elektrostatischen Direktantriebs.

Die Vorrichtung 1 ist als Stapel von zwei strukturierten Chips 5, 6 realisiert. Der erste Chip 5 bildet die Strahlungsquelle 3 aus, wobei die eigentliche Strahlungsquelle 3 aus einer Mehrzahl von sich streifenförmig erstreckenden Emitterflächen 7 aufgebaut ist. Die Emitterflächen 7 sind in dem Betrieb der Vorrichtung 1 stromdurchflossene elektrisch leitende metallische Streifen, die jeweils einen thermischen Strahler bilden. Die Streifen der Emitterflächen 7 sind rechteckförmig und erstrecken sich in einer Richtung senkrecht zur Bildebene länglich ausgedehnt nebeneinander. Die einzelnen Emitterflächen 7 sind äquidistant zueinander beabstandet, sodass sich eine räumlich periodische Gitterstruktur mit einer konstanten räumlichen Periodizität ergibt. Zwischen zwei Emitterflächen 7 ist jeweils eine nichtemittierende Fläche 26 der Strahlungsquelle 3 angeordnet.

Ein dünner Abstandshalter 8 hält den Modulatorchip 6 mit der Blende 4 auf Abstand zu dem Emitterchip 5. Die Blende 4 weist in der dargestellten Ausführungsform eine Mehrzahl von ersten, die Anregungsstrahlung 2 reflektierenden Flächenabschnitten 9 auf und eine Mehrzahl von die Anregungsstrahlung 2 transmittierenden zweiten Flächenabschnitten 10. Die Anregungsstrahlung 2 reflektierenden ersten Flächenabschnitte 9 bestehen aus sich in einer Richtung senkrecht zur Bildebene länglich ausgedehnt erstreckenden äquidistanten Streifen aus einer metallischen Beschichtung auf dem für die Anregungsstrahlung 2 transparenten Halbleitermaterial der Blende 4.

Die Blende 4 ist integrierter Bestandteil des Modulatorchips 6 und an Federn in den mit den Bezugszeichen 11 und 16 bezeichneten Richtung hin und her bewegbar. Für den Antrieb dieser Hinund Herbewegung sind Interdigitalelektroden (nicht gezeigt) vorgesehen, die den elektrostatischen Direktantrieb ausbilden. Je nach Polung der Interdigitalelektroden wird die federnd aufgehängte Blende 4 in die eine oder andere Richtung parallel zu den Emitterflächen 7 verschoben.

Der Chipstapel 5, 6 ist durch Fenster 12, 13 abgekapselt, wobei der so gebildete Innenraum 14, in welchem sich sowohl die Emitterflächen 7 als auch die Blende 4 befinden, mit einem Schutzgas befüllt ist, welches den Energieverbrauch oder das Abstrahlverhalten der Vorrichtung 1 beeinflusst.

Figur 1 zeigt den nicht abgeschatteten Zustand der Mehrzahl von Emitterflächen 7. Die Anregungsstrahlung 2 von den einzelnen Emitterflächen 7 kann ungehindert auf einen Detektor oder allgemein eine nächste optische Komponente 15 im Strahlengang treffen.

Demgegenüber zeigt Figur 2 den abgeschatteten Zustand der Emitterflächen 7. Dazu ist die Blende 4 in die der Richtung 11 entgegengesetzte Richtung 16 verschoben, wodurch sich die spiegelnden Streifen 9 über den Emitterflächen 7 befinden. Die Anregungsstrahlung kann die nächste optische Komponente 15 im Strahlengang auf diese Weise nicht erreichen. Durch den periodischen Wechsel der beiden in den Figuren 1 und 2 gezeigten Zustände wird die Strahlung auf der nächsten optischen Komponente 15 im Strahlengang mit einer sehr hohen Frequenz moduliert.

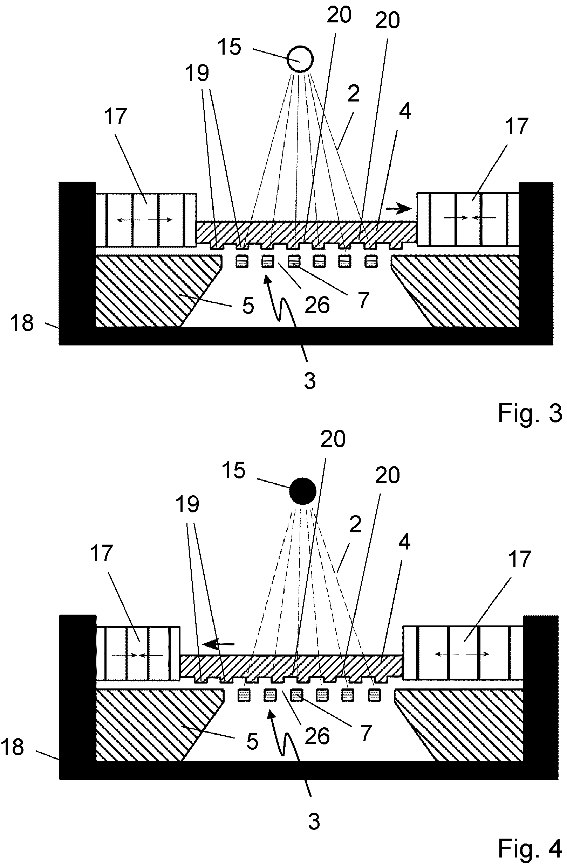

Auch die Ausführungsform der Figuren 3 und 4 ist eine hochintegrierte Variante der erfindungsgemäßen Vorrichtung 1. Dabei ist der Emitterchip 5 der gleiche, wie in der Ausführungsform der Figuren 1 und 2.

Die Blende 4 hingegen unterscheidet sich sowohl im Hinblick auf ihre Strukturierung und Funktionalität als auch im Hinblick auf ihren Antrieb. Auch diese Blende 4 ist in den mit den Bezugszeichen 11 und 16 bezeichneten Richtungen periodisch relativ zu der Strahlungsquelle 3 mit der Mehrzahl von Emitterflächen 7 schnell hin und her bewegbar. Als Antrieb dienen zwei piezoelektrische Elemente 17 auf beiden Seiten der Blende 4. Durch Anlegen einer Spannung an die piezoelektrischen Elemente 17 dehnen sich die Elemente aus oder sie ziehen sich zusammen, wodurch die Blende 4 lateral in den Richtungen 11, 16 hin und her verschiebbar ist. Die piezoelektrischen Elemente 17 sind zusammen mit dem Emitterchip 5 an einer Stützstruktur 18 montiert.

Im Gegensatz zu der Ausführungsform der Figuren 1 und 2 weist die Vorrichtung 1 gemäß den Figuren 3 und 4 keine Fenster auf, sodass die Blende 4 und der Emitterchip 5 den Umgebungsbedingungen ausgesetzt sind.

Die Blende 4 basiert abweichend von der Ausführungsform der Figuren 1 und 2 auf der Verwendung einer dielektrischen streifenförmigen Phasenstruktur. Die Blende 4 ist in allen Bereichen für die Anregungsstrahlung 2 transparent. Allerdings hat die Blende im Bereich Mehrzahl von ersten Flächenabschnitten 19 einen längeren optischen Weg für die elektromagnetische Strahlung als im Bereich der Mehrzahl von zweiten Flächenabschnitten 20. Auch die ersten und zweiten Flächenabschnitte 19, 20 der Ausführungsform der Figuren 3 und 4 sind wieder in einer Richtung senkrecht zur Bildebene länglich ausgestaltet, wobei die einzelnen Flächenabschnitte 19, 20 äquidistant zueinander angeordnet sind.

Die ersten Flächenabschnitte 19 mit dem längeren optischen Weg durch die Blende 4 und die zweiten Flächenabschnitte 20 mit dem kürzeren optischen Weg durch die Blende 4 sind so angeordnet und ausgeprägt, dass sie in der ersten in Figur 3 gezeigten Position der Blende 4 in lateraler Richtung eine konstruktive Interferenz der Anregungsstrahlung 2 auf der nächsten optischen Komponente 15 im Strahlengang bewirken. Nach dem Verschieben in die zweite, in Figur 4 gezeigte Position der Blende 4 in lateraler Richtung hingegen interferiert die Anregungsstrahlung 2 destruktiv auf der nächsten optischen Komponente 15 im Strahlengang.

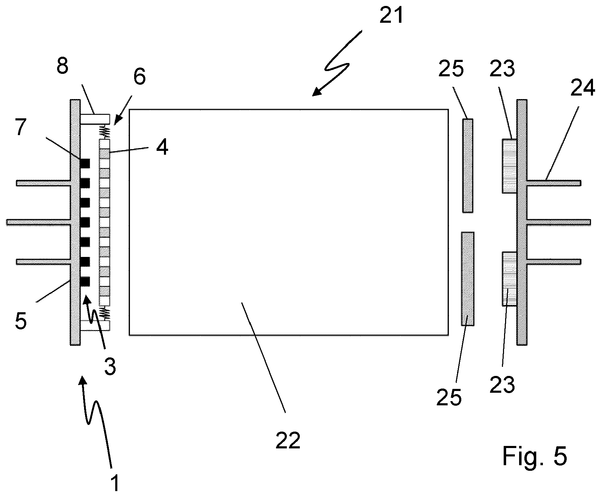

Figur 5 zeigt eine Anwendung der Vorrichtung 1, so wie sie in Ausführungsformen davon zuvor beschrieben wurde. Figur 5 zeigt eine Ausführungsform der Vorrichtung 1 gemäß den Figuren 1 und 2 schematisch eingesetzt als Strahlungsquelle in einem Photometer 21. Das Photometer 21 umfasst neben der Vorrichtung 1 als Quelle für die Anregungsstrahlung eine Küvette 22 mit einer wässrigen Messlösung. In Abhängigkeit von der Lösung in der Küvette 22 wird ein Teil der von der Vorrichtung 1 abgestrahlten Anregungsstrahlung 2 in der Küvette 22 absorbiert. Die durch die Küvette 22 transmittierte Anregungsstrahlung 2 wird mithilfe zweier Fotodioden 23 auf einem gemeinsamen Sockel 24 erfasst. Dabei ist vor jeder der Fotodioden 23 ein Interferenzfilter 25 angeordnet, welches die breitbandige, von der Strahlungsquelle 3 erzeugte thermische Anregungsstrahlung 2 in zwei charakteristische Spektralbereiche filtert. Die Erfassung der durch die Küvette 22 transmittierten Anregungsstrahlung 2 erfolgt mithilfe eines Lock-in-Detektors, welcher als Referenzfrequenz die Modulationsfrequenz mit welcher die Blende 4 vor den Emitterflächen 7 hin und her bewegt wird, verwendet.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Titel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: Vorrichtung
- 2: Anregungsstrahlung
- 3: Strahlungsquelle
- 4: Blende
- 5: Emitterchip
- 6: Modulatorchip
- 7: Emitterfläche
- 8: Abstandshalter
- 9: erster Flächenabschnitt
- 10: zweiter Flächenabschnitt
- 11, 16: Bewegungsrichtungen
- 12, 13: Fenster
- 14: Innenraum
- 15: optische Komponente
- 17: piezoelektrisches Element
- 18: Stützstruktur
- 19: erster Fläschenabschnitt
- 20: zweiter Flächenabschnitt
- 21: Photometer
- 22: Küvette
- 23: Fotodiode
- 24: Sockel
- 25: Interferenzfilter
- 26: nichtemittierende Fläche

## Patentansprüche

1. Vorrichtung (1) zum Erzeugen und Abstrahlen modulierter elektromagnetischer Anregungsstrahlung (2) mit
einer Strahlungsquelle (3),
einer Blende (4) und
einer Antriebseinrichtung (17),
wobei die Strahlungsquelle (3) derart eingerichtet ist, dass die Strahlungsquelle (3) in einem Betrieb der Vorrichtung (1) die elektromagnetische Anregungsstrahlung (2) emittiert,
wobei die Strahlungsquelle (3) und die Blende (4) derart angeordnet sind, dass die von der Strahlungsquelle (3) emittierte Anregungsstrahlung (2) die Blende (4) beleuchtet,
wobei die Blende (4) eine Mehrzahl von ersten Flächenabschnitten (9) und eine Mehrzahl von zweiten Flächenabschnitten (10) aufweist, wobei die Mehrzahl von ersten Flächenabschnitten (9) eine erste Transmission oder eine erste optische Weglänge aufweist, wobei die Mehrzahl von zweiten Flächenabschnitten (10) eine zweite Transmission oder eine zweite optische Weglänge aufweist, wobei die erste Transmission von der zweiten Transmission verschieden ist oder die erste optische Weglänge von der zweiten optischen Weglänge verschieden ist, und
wobei die Antriebseinrichtung (17) derart ausgestaltet und angeordnet ist, dass in dem Betrieb der Vorrichtung (1) die Strahlungsquelle (3) und die Blende (4) von der die Antriebseinrichtung (17) angetrieben derart relativ zueinander bewegbar sind, dass die Strahlungsquelle (3) und die Blende (4) periodisch abwechselnd eine erste Relativposition zueinander und eine zweite Relativposition zueinander aufweisen,
**dadurch gekennzeichnet, dass**
die Strahlungsquelle (3) eine Mehrzahl von Emitterflächen (7) aufweist, wobei jeweils zwei Emitterflächen (7) räumlich durch eine nichtemittierende Fläche (26) voneinander beabstandet angeordnet sind, und
die Emitterflächen (7) der Strahlungsquelle (3) zueinander, die Flächenabschnitte (9, 10) der Blende (4) zueinander sowie die Strahlungsquelle (3) und
die Blende (4) zueinander derart angeordnet sind, dass in der ersten Relativposition die Anregungsstrahlung (2) die Mehrzahl von ersten Flächenabschnitten (9) beleuchtet und in der zweiten Relativposition die Anregungsstrahlung (2) die Mehrzahl von zweiten Flächenabschnitten (10) beleuchtet.

2. Vorrichtung (1) nach dem vorhergehenden Anspruch, wobei die Mehrzahl von ersten Flächenabschnitten (9), die Mehrzahl von zweiten Flächenabschnitten (10) und die Mehrzahl von Emitterflächen (7) jeweils streifenförmig, vorzugsweise rechteckig, sind.

3. Vorrichtung (1) nach dem vorhergehenden Anspruch, wobei die rechteckigen Streifen der Mehrzahl von ersten Flächenabschnitten (9), der Mehrzahl von zweiten Flächenabschnitten (10) und der Mehrzahl von Emitterflächen (7) eine Breite in einem Bereich von 10 µm bis 200 µm, vorzugsweise in einem Bereich von 50 µm bis 100 µm aufweisen.

4. Vorrichtung (1) nach einem der vorhergehenden Ansprüche, wobei eine Gesamtfläche der Strahlungsquelle (3) mit der Mehrzahl von Emitterflächen (7) und der nichtemittierenden Fläche (26) in einem Bereich von 0,2 mm x 0,2 mm bis 10 mm x 10 mm liegt.

5. Vorrichtung (1) nach einem der vorhergehenden Ansprüche, wobei die Blende (4) und die Emitterflächen (7) einen Abstand gemessen in einer Richtung senkrecht zu den Emitterflächen (7) von 100 µm oder weniger, vorzugsweise von 10 µm oder weniger aufweisen.

6. Vorrichtung (1) nach einem der vorhergehenden Ansprüche, wobei die Antriebseinrichtung (17) derart ausgestaltet ist, dass die Antriebseinrichtung (17) in dem Betrieb der Vorrichtung (1) eine oszillierende, vorzugsweise eine periodisch oszillierende, relative Linearbewegung zwischen der Strahlungsquelle (3) und der Blende (4) bewirkt.

7. Vorrichtung (1) nach dem vorhergehenden Anspruch, wobei die Antriebseinrichtung (17) ein mikromechanischer Antrieb, ein elektrostatischer Antrieb oder ein Piezoantrieb ist.

8. Vorrichtung (1) nach einem der vorhergehenden Ansprüche, wobei die Mehrzahl von ersten Flächenabschnitten (9) für die Anregungsstrahlung (2) transparent ist und wobei die Mehrzahl von zweiten Flächenabschnitten (10) für die Anregungsstrahlung (2) intransparent ist.

9. Vorrichtung (1) nach einem der vorhergehenden Ansprüche, wobei die Mehrzahl von ersten Flächenabschnitten (9) eine räumlich periodische Struktur mit einer räumlichen Periodizität in einer Bewegungsrichtung der Blende (4) relativ zu der Strahlungsquelle (3) bildet.

10. Vorrichtung (1) nach einem der vorhergehenden Ansprüche, wobei die Mehrzahl von Emitterflächen (7) eine räumlich periodische Struktur mit einer räumlichen Periodizität in einer Bewegungsrichtung der Blende (4) relativ zu der Strahlungsquelle (3) bildet.

11. Vorrichtung (1) nach den Ansprüchen 9 und 10, wobei die räumliche Periodizität der räumlich periodischen Struktur der Mehrzahl von ersten Flächenabschnitten (9) von der räumlichen Periodizität der räumlich periodischen Struktur der Emitterflächen (7) verschieden ist.

12. Vorrichtung (1) nach einem der Ansprüche 9 bis 11, wobei sich zumindest die räumliche Periodizität der räumlich periodischen Struktur der ersten Flächenabschnitte (9) oder die räumliche Periodizität der räumlich periodischen Struktur der Emitterflächen (7) in der Bewegungsrichtung (11, 16) ändert.

13. Vorrichtung (1) nach dem vorhergehenden Anspruch, wobei die Strahlungsquelle (3) derart eingerichtet ist, dass die Strahlungsquelle (3) in dem Betrieb der Vorrichtung (1) die Anregungsstrahlung (2) mit einer Trägerfrequenz erzeugt, wobei die Emitterflächen (7) derart ausgestaltet sind, dass sich die Trägerfrequenz in der Bewegungsrichtung (11, 16) ändert.

14. Photoakustischer Sensor mit einer Vorrichtung (1) zum Erzeugen von amplitudenmodulierter elektromagnetischer Anregungsstrahlung (2) nach einem der vorhergehenden Ansprüche.

15. Photometer (21) mit einer Vorrichtung (1) zum Erzeugen von amplitudenmodulierter elektromagnetischer Anregungsstrahlung (2) nach einem der vorhergehenden Ansprüche.

16. Verfahren zum Erzeugen und Abstrahlen modulierter elektromagnetischer Anregungsstrahlung (2) mit den Schritten
Emittieren der elektromagnetischen Anregungsstrahlung (2),
Beleuchten einer Blende (4) mit der emittierten Anregungsstrahlung (2), wobei die Blende (4) eine Mehrzahl von ersten Flächenabschnitten (9) und eine Mehrzahl von zweiten Flächenabschnitten (10) aufweist, wobei die Mehrzahl von ersten Flächenabschnitten (9) einer erste Transmission oder eine erste optische Weglänge aufweist, wobei die Mehrzahl von zweiten Flächenabschnitten (10) eine zweite Transmission oder eine zweite optische Weglänge aufweist, wobei die erste Transmission von der zweiten Transmission verschieden ist oder die erste optische Weglänge von der zweiten optischen Weglänge verschieden ist, und
Bewegen der Strahlungsquelle (3) und der Blende (4) derart relativ zueinander, dass die Strahlungsquelle (3) und die Blende (4) periodisch abwechselnd eine erste Relativposition zueinander und eine zweite Relativposition zueinander aufweisen,
**dadurch gekennzeichnet, dass**
die Anregungsstrahlung (2) von einer Mehrzahl von Emitterflächen (7) emittiert wird, wobei jeweils zwei Emitterflächen (7) räumlich durch eine nichtemittierende Fläche (26) voneinander beabstandet angeordnet sind, und die Emitterflächen (7) zueinander, die Flächenabschnitte (9, 10) der Blende (4) zueinander sowie die Emitterflächen (7) und die Blende (4) zueinander derart angeordnet sind, dass in der ersten Relativposition die Anregungsstrahlung (2) die Mehrzahl von ersten Flächenabschnitten (9) beleuchtet und in der zweiten Relativposition die Anregungsstrahlung (2) die Mehrzahl von zweiten Flächenabschnitten (10) beleuchtet.
